# EUROPEAN PATENT SPECIFICATION

(11) **EP 4 027 360 B1**
(45) Date of publication and mention of the grant of the patent: **14.05.2025**
(21) Application number: 21164474.5
(22) Date of filing: 24.03.2021
(51) Int. Cl.: H01G 2/04, H01G 2/02, H01G 2/10, H01G 9/08, H01G 9/10

(54) **INTEGRATED MOULDED CAPACITOR HAVING A BUTTON-SHAPE**
INTEGRIERTER FORMKONDENSATOR IN KNOPFFORM
CONDENSATEUR ENROBÉ INTÉGRÉ AYANT LA FORME D'UN BOUTON

(30) Priority: 06.01.2021 CN 202110013835
(43) Date of publication of application: 13.07.2022
(73) Proprietor: Capxon Electronic Technology Co., Ltd, Shenzhen, Guangdong 518106 (CN)
(72) Inventor: CHEN, Qirui, Shenzhen, Guangdong 518106 (CN); LIN, I-CHU, Shenzhen, Guangdong 518106 (CN); LIN, Jincun, Shenzhen, Guangdong 518106 (CN)
(74) Representative: Vitina, Maruta

(56) References cited:
- JP-A- 2000 331 862
- JP-A- 2006 049 556
- JP-A- 2007 109 775
- JP-A- 2011 096 750
- JP-A- 2012 134 007
- JP-A- 2015 095 611
- JP-A- H0 786 102
- JP-A- H1 064 752

## Description

### TECHNICAL FIELD

This application relates to capacitors, and more particularly to an integrated capacitor and a method for making the integrated capacitor.

### BACKGROUND

With the progress of control technology, the use environment of aluminum electrolytic capacitors becomes more and more severe, and there are higher requirements for the safety performance of aluminum electrolytic capacitors. At this time, aluminum electrolytic capacitors used in vehicles and ultra-thin and lightweight electronic equipment have high requirements about volume and anti-vibration performance. Ultra-thin capacitors are suitable for precision electronic products with light weight, small thickness and small size, and are widely used in various electronic products with compact structure, small size and high precision. Due to the large volume, the height of the existing capacitors affects the volume of electronic products. At present, there is no ultra-thin and lightweight integrated capacitor with high safety. Traditional capacitors have defects of large height and weight and large space occupation, and poor anti-explosion performance, short circuit resistance and anti-vibration performance.

JP 2006049556 A discloses a capacitor and a procedure for assembling the capacitor. First, a capacitor element is housed inside a case. Next, a covering member is inserted into the case while terminals of the capacitor element are inserted into insertion holes of the covering member. A constant interval is formed between the capacitor element and an inner surface of the case. The case is filled with an insulating resin such as an epoxy resin from the injection hole of the covering member.

JP 2011096750 A discloses a method for making a capacitor that includes a case having openings and on both opposite sides thereof, a capacitor element housed in the case, and a capacitor element. A terminal connected to the capacitor element is inserted, and a terminal plate fitted to one opening of the case is provided. Grooves formed in the fitting portion of the terminal plate and the case. A first resin is injected into the fitting portion and cured, and the case is filled with a second resin.

JP 2007109775 A discloses a case-molded capacitor including a case, a capacitor element, and a bus bar connected to the capacitor element. The bus bar has an external connection surface substantially parallel to an upper surface of filling resin that is filled in the gap between the case and the capacitor element. JP H0786102 A discloses an aluminum electrolytic capacitor including a capacitor element placed in a case, and an insulating plate from which a lead wire can be drawn. The insulating plate is formed with a resin injection portion for filling the resin. JP 2012134007 A discloses a connector with built-in electronic components, including a case and a component housed in a chamber of the case, and filled with a mold material in a gap between the component and the chamber. JP H1064752 A discloses a resin-sealed capacitor in which a capacitor element is housed in a case and filled with an insulating resin, and the filled insulating resin is placed around the capacitor element. JP 2015095611 A discloses a case-molded capacitor including a capacitor element that is sealed by filling a resin case with a filler. JP 2000331862 A discloses a film capacitor having a resin case for accommodating the capacitor element, and an insulating plate having a size larger than the case located at an opening of the case. The resin is injected through the window in the insulating plate, filled and then cured. The resin is filled in the gap and the adhesion between the case and the insulating plate.

### SUMMARY

To overcome shortcomings of large height and weight and large space occupation in the prior arts, the disclosure provides a method for making an integrated capacitor. A capacitor core is integrally sleeved with a cover plate and then subjected to primary packaging, and then the cover plate, a shell and a sealing body formed therebetween by injection molding are subjected to secondary packaging to produce an ultra-thin and lightweight integrated capacitor with high safety. The integrated capacitor is light and thin, and has good anti-explosion performance, short circuit resistance and anti-vibration performance.

The technical solutions of the disclosure are described as follows.

This disclosure provides a method for making an integrated capacitor according to claim 1, the integrated capacitor comprising:
a shell;
a sealing body;
a cover plate;
a capacitor core;
a guide pin; and
a positioning boss;
the cover plate being provided with an inner cavity; wherein the method comprises steps of:
   a) inserting the capacitor core into the inner cavity of the cover plate such that the capacitor core is integrally sleeved in the inner cavity of the cover plate with top end surface and a side surface of the capacitor core being completely covered by the cover plate; wherein a side wall of the inner cavity of the cover plate fits the capacitor core; the guide pin is connected to the capacitor core; the cover plate is provided with a third through hole; the guide pin passes through the third through hole to protrude from an upper end surface of the cover plate; the positioning boss is fixedly arranged on the upper end surface of the cover plate;
   b) installing the cover plate integrally sleeved with the capacitor core in the shell for packaging such that a bottom end surface of the capacitor core and an outer side wall of the cover plate are completely covered by the shell; wherein the outer side wall of the cover plate fits an inner wall of the shell; the top end surface of the capacitor core faces the upper end surface of the cover plate and the bottom end surface of the capacitor core faces a bottom surface of the shell; and;
   c) forming the sealing body by injection molding on the upper end surface of the cover plate to seal an opening of the such that the sealing body and the shell are integrally packaged; wherein the guide pin and the positioning boss pass through the sealing body to protrude from the sealing body.

In some embodiments, a space is reserved between the upper end surface of the cover plate and an edge of the opening of the shell for formation of the sealing body by injection molding.

In some embodiments, the sealing body is integrated with the shell after injection molding and solidification.

In some embodiments, two third through holes are provided in the cover plate; the two third through holes correspond to the guide pin, respectively; and the positioning boss is provided on the upper end surface of the cover plate.

In some embodiments, a first through hole is formed on the sealing body in which the sealing body connects to the positioning boss; and a second through hole is formed on the sealing body in which the sealing body connects to the guide pin.

The beneficial effects of the present disclosure are described as follows.

In the present disclosure, a capacitor core is integrally sleeved with a cover plate and then subjected to primary packaging, and then the cover plate, a shell and a sealing body formed therebetween by injection molding are subjected to secondary packaging to produce an ultra-thin and lightweight integrated capacitor with high safety and desirable anti-explosion performance, short circuit resistance and anti-vibration performance, overcoming the defects of large height and weight and large space occupation in the prior art. As a consequence, the capacitor provided herein is considered to have a brilliant application prospect.

### BRIEF DESCRIPTION OF THE DRAWINGS

FIG 1 is a perspective view of an integrated capacitor in accordance with an embodiment of the present disclosure;
FIG 2 is an explosive view of the integrated capacitor in accordance with an embodiment of the present disclosure;
FIG 3 depicts structures of a cover plate and a capacitor core in accordance with an embodiment of the present disclosure;
FIG 4 depicts the sleeve connection between the cover plate and the capacitor core in accordance with an embodiment of the present disclosure; and
FIG 5 is a perspective view of the capacitor core in accordance with an embodiment of the present disclosure.

In the drawings, 1, shell; 2, sealing body; 3, cover plate; 4, capacitor core; 5, first through hole; 6, second through hole; 7, third through hole; 8, positioning boss; 9, guide pin; and 10, inner cavity.

### DETAILED DESCRIPTION OF EMBODIMENTS

The embodiments of the present disclosure will be further described clearly below with reference to the accompanying drawings.

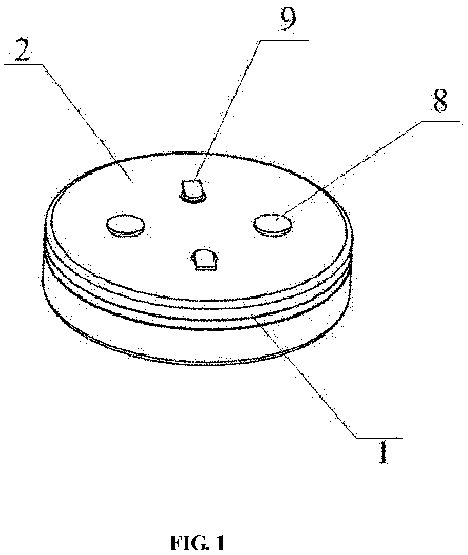

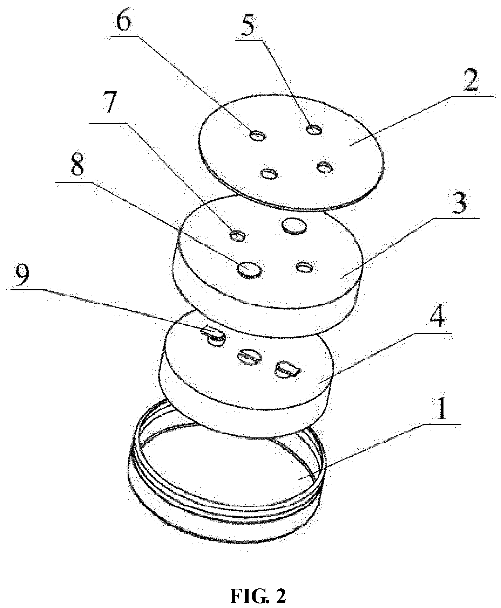

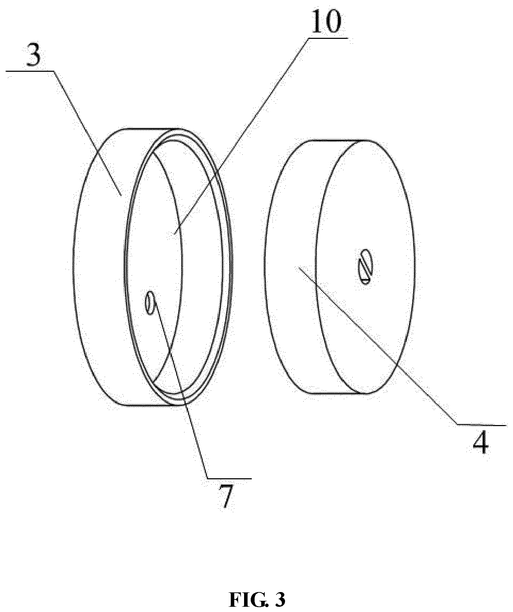

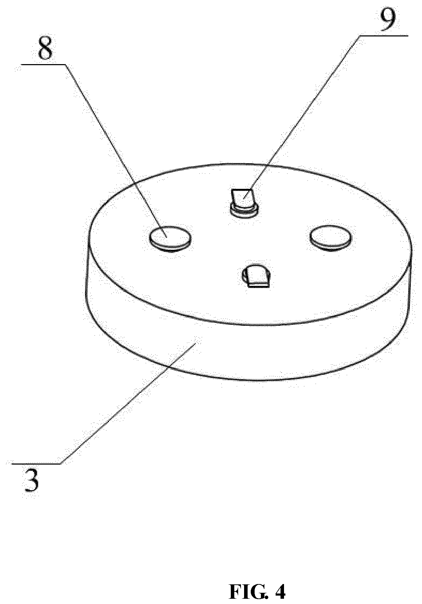

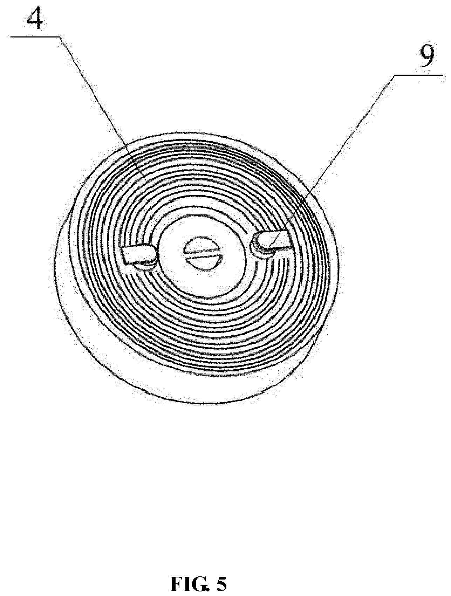

As shown in Figs. 1-5, an integrated capacitor includes a shell 1, a sealing body 2, a cover plate 3, a capacitor core 4, a guide pin 9 and a positioning boss 8. The cover plate 3 is provided with an inner cavity 10. The capacitor core 4 is integrally sleeved in the inner cavity 10 of the cover plate 3. The guide pin 9 is connected to the capacitor core 4. The cover plate 3 is provided with a third through hole 7. The guide pin 9 passes through the third through hole 7 to protrude from an upper end surface of the cover plate 3. The positioning boss 8 is fixedly arranged on the upper end surface of the cover plate 3. After being sleeved with the capacitor core 4, the cover plate 3 is installed in the shell 1 for packaging. The sealing body 2 is formed between the upper end surface of the cover plate 3 and an opening of the shell 1 by injection molding. The sealing body 2 and the shell 1 are integrally packaged. The guide pin 9 and the positioning boss 8 pass through the sealing body 2 to protrude from the sealing body 2.

The shell 1 is integrally formed. An anti-explosion valve is arranged on a top of the shell 1, and the height of the shell 1 matches the length of the capacitor core 4. The inner wall of the shell 1 is closely fitted and fixed with the cover plate 3 to form a closed space inside the shell 1. The cover plate 3 is provided with an inner cavity 10. A diameter of the inner cavity fits a diameter of the capacitor core 4. The inner cavity 10 of the cover plate 3 is provided with the capacitor core 4. A side wall of the inner cavity 10 fits the capacitor core 4, and a side wall of the cover plate 3 fits an inner wall of the shell 1, so that the cover plate 3 and the capacitor core 4 are firmly fixed in the shell 1. The installation process of the capacitor core 4 is described as follows. The guide pin 9 on the capacitor core 4 is allowed to pass through the third through hole 7 on the upper end surface of the cover plate 3, and the capacitor core 4 is inserted into the inner cavity 10 of the cover plate 3. The capacitor core 4 can be completely sleeved in the inner cavity 10 of the cover plate 3. The capacitor core 4 can be completely covered by the cover plate 3 after inserted. At this time, the capacitor core 4 and the cover plate 3 are integrated, so that the capacitor core 4 is more firmly fixed in the cover plate 3. Since the side wall of the cover plate 3 is attached to the inner wall of the shell 1, the cover plate 3 and the capacitor core 4 are firmly fixed in the shell 1.

Two third through holes 7 are provided in the cover plate 3. The two third through holes 7 correspond to the guide pin 9, respectively. The positioning boss 8 is provided on the upper surface of the cover plate 3. The guide pin 9 is connected to the capacitor core 4, and passes through the two third through holes 7 in the cover plate 3, respectively. The guide pin 9 passes through the two third through holes 7 to protrude from the upper end surface of the cover plate 3. The positioning boss 8 is fixedly arranged on the upper end surface of the cover plate 3. The positioning boss 8 and the cover plate 3 are fixedly connected as a whole.

The cover plate 3 is sleeved with the capacitor core 4 and then is installed in the shell 1 for packaging, so as to allow the cover plate 3 and the capacitor core 4 to be fixed in the shell 1 for primary packaging. The sealing body 2 is formed between the upper end surface of the cover plate 3 and the opening of the shell 1 by injection molding. A space is reserved between the upper end surface of the cover plate 3 and an edge of the opening of the shell 1 for formation of the sealing body 2 by injection molding.

A first through hole 5 is formed on the sealing body 2 where the sealing body 2 connects to the positioning boss 8. A second through hole 6 is formed on the sealing body 2 where the sealing body 2 connects to the guide pin 9. The second through hole 6 and the first through hole 5 are respectively adhered to the guide pin 9 and the positioning boss 8 to form the sealing body 2.

The guide pin 9 in the capacitor core 4 passes through the two third through holes 7 and is fixed under the adhesion of the sealing body 2. The guide pin 9 of the cover plate 3, the positioning boss 8 and the shell 1 are integrally fixed by the sealing body 2. The sealing body 2 is integrated with the shell 1 after injection molding and solidification. The sealing body 2 and the shell 1 are integrally packaged. The guide pin 9 and the positioning boss 8 pass through the sealing body 2 to protrude from the sealing body 2. A secondary packaging is performed by injection molding of the sealing body 2 to obtain an ultra-thin and lightweight integrated capacitor with high safety.

While there has been described what is believed to be the preferred embodiments of the invention, those skilled in the art will recognize that other and further modifications may be made thereto without departing from the scope of the invention as defined by the appended claims.

## Claims

1. A method for making an integrated capacitor, comprising:
a shell (1);
a sealing body (2);
a cover plate (3);
a capacitor core (4);
a guide pin (9); and
a positioning boss (8);
the cover plate (3) being provided with an inner cavity (10); wherein the method comprises steps of:
a) inserting the capacitor core (4) into the inner cavity (10) of the cover plate (3) such that the capacitor core (4) is integrally sleeved in the inner cavity (10) of the cover plate (3) with a top end surface and a side surface of the capacitor core (4) being completely covered by the cover plate (3); wherein a side wall of the inner cavity (10) of the cover plate (10) fits the capacitor core (4); the guide pin (9) is connected to the capacitor core (4); the cover plate (3) is provided with a third through hole (7); the guide pin (9) passes through the third through hole (7) to protrude from an upper end surface of the cover plate (3); the positioning boss (8) is fixedly arranged on the upper end surface of the cover plate (3);
b) installing the cover plate (3) integrally sleeved with the capacitor core (4) in the shell (1) for packaging such that a bottom end surface of the capacitor core (4) and an outer side wall of the cover plate (3) are completely covered by the shell (1); wherein the outer side wall of the cover plate (3) fits an inner wall of the shell (1); the top end surface of the capacitor core (4) faces the upper end surface of the cover plate (3) and the bottom end surface of the capacitor core (4) faces a bottom surface of the shell (1); and
c) forming the sealing body (2) by injection molding on the upper end surface of the cover plate (3) to seal an opening of the shell (1) such that the sealing body (2) and the shell (1) are integrally packaged; wherein the guide pin (9) and the positioning boss (8) pass through the sealing body (2) to protrude from the sealing body (2).

2. The method according to claim 1, wherein a space is reserved between the upper end surface of the cover plate (3) and an edge of the opening of the shell (1) for formation of the sealing body (2) by injection molding.

3. The method according to claim 1, wherein the sealing body (2) is integrated with the shell (1) after injection molding and solidification.

4. The method according to claim 1, wherein two third through holes (7) are provided in the cover plate (3); the two third through holes (7) correspond to the guide pin (9), respectively; and the positioning boss (8) is provided on the upper end surface of the cover plate (3).

5. The method according to claim 1, wherein a first through hole (5) is formed on the sealing body (2) in which the sealing body (2) connects to the positioning boss (8); and a second through hole (6) is formed on the sealing body (2) in which the sealing body (2) connects to the guide pin (9).

## Patentansprüche

1. Verfahren zur Herstellung eines integrierten Kondensators, umfassend:
eine Schale (1);
einen Dichtungskörper (2);
eine Abdeckplatte (3);
einen Kondensatorkern (4);
einen Führungsstift (9); und
einen Positionierungsvorsprung (8);
wobei die Abdeckplatte (3) mit einem inneren Hohlraum (10) versehen ist; wobei das Verfahren die folgenden Schritte umfasst:
a) Einsetzen des Kondensatorkerns (4) in den inneren Hohlraum (10) der Abdeckplatte (3), so dass der Kondensatorkern (4) integral in den inneren Hohlraum (10) der Abdeckplatte (3) eingehüllt ist, wobei eine obere Endfläche und eine Seitenfläche des Kondensatorkerns (4) vollständig von der Abdeckplatte (3) bedeckt sind; wobei eine Seitenwand des inneren Hohlraums (10) der Abdeckplatte (3) zu dem Kondensatorkern (4) passt; wobei der Führungsstift (9) mit dem Kondensatorkern (4) verbunden ist; wobei die Abdeckplatte (3) mit einem dritten Durchgangsloch (7) versehen ist; wobei der Führungsstift (9) durch das dritte Durchgangsloch (7) hindurchgeht, um aus einer oberen Endfläche der Abdeckplatte (3) hervorzuragen; wobei der Positionierungsvorsprung (8) fest an der oberen Endfläche der Abdeckplatte (3) angeordnet ist;
b) Einsetzen der mit dem Kondensatorkern (4) integral umhüllten Abdeckplatte (3) in die Schale (1) zum Verpacken, so dass eine untere Endfläche des Kondensatorkerns (4) und eine äußere Seitenwand der Abdeckplatte (3) vollständig von der Schale (1) bedeckt sind; wobei die äußere Seitenwand der Abdeckplatte (3) zu einer Innenwand der Schale (1) passt; wobei die oberseitige Endfläche des Kondensatorkerns (4) der oberen Endfläche der Abdeckplatte (3) zugewandt ist und die untere Endfläche des Kondensatorkerns (4) einer Bodenfläche der Schale (1) zugewandt ist; und
c) Bilden des Dichtungskörpers (2) durch Spritzgießen auf der oberen Endfläche der Abdeckplatte (3), um eine Öffnung der Schale (1) abzudichten, so dass der Dichtungskörper (2) und die Schale (1) einstückig verpackt sind; wobei der Führungsstift (9) und der Positionierungsvorsprung (8) durch den Dichtungskörper (2) hindurchgehen, um aus dem Dichtungskörper (2) herauszuragen.

2. Verfahren nach Anspruch 1, wobei zwischen der oberen Endfläche der Abdeckplatte (3) und einem Rand der Öffnung der Schale (1) ein Raum zum Bilden des Dichtungskörpers (2) durch Spritzgießen freigehalten wird.

3. Verfahren nach Anspruch 1, wobei der Dichtungskörper (2) nach dem Spritzgießen und Erstarren in die Schale (1) integriert wird.

4. Verfahren nach Anspruch 1, wobei zwei dritte Durchgangslöcher (7) in der Abdeckplatte (3) vorgesehen sind; wobei die beiden dritten Durchgangslöcher (7) jeweils dem Führungsstift (9) entsprechen; und wobei der Positionierungsvorsprung (8) an der oberen Endfläche der Abdeckplatte (3) vorgesehen ist.

5. Verfahren nach Anspruch 1, wobei ein erstes Durchgangsloch (5) am Dichtungskörper (2) ausgebildet ist, in dem der Dichtungskörper (2) mit dem Positionierungsvorsprung (8) verbunden ist, und wobei ein zweites Durchgangsloch (6) am Dichtungskörper (2) ausgebildet ist, in dem der Dichtungskörper (2) mit dem Führungsstift (9) verbunden ist.

## Revendications

1. Procédé de fabrication d'un condensateur intégré, comprenant :
une coque (1) ;
un corps d'étanchéité (2) ;
une plaque de recouvrement (3) ;
un noyau de condensateur (4) ;
une broche de guidage (9) ; et
un bossage de positionnement (8) ;
la plaque de recouvrement (3) étant pourvue d'une cavité intérieure (10) ; dans lequel le procédé comprend les étapes suivantes :
a) insérer le noyau de condensateur (4) dans la cavité intérieure (10) de la plaque de recouvrement (3) de telle sorte que le noyau du condensateur (4) soit intégralement emmanché dans la cavité intérieure (10) de la plaque de recouvrement (3), avec une surface d'extrémité supérieure et une surface latérale du noyau du condensateur (4) étant complètement recouvertes par la plaque de recouvrement (3) ; dans lequel une paroi latérale de la cavité intérieure (10) de la plaque de recouvrement (3) s'adapte au noyau du condensateur (4) ; la broche de guidage (9) est connectée au noyau de condensateur (4) ; la plaque de recouvrement (3) est pourvue d'un troisième trou traversant (7) ; la broche de guidage (9) traverse le troisième trou traversant (7) pour faire saillie d'une surface d'extrémité supérieure de la plaque de recouvrement (3) ; le bossage de positionnement (8) est disposé de manière fixe sur la surface d'extrémité supérieure de la plaque de recouvrement (3) ;
b) installer la plaque de recouvrement (3) intégralement gainée avec le noyau du condensateur (4) dans la coque (1) pour l'emballage de telle sorte qu'une surface d'extrémité inférieure du noyau du condensateur (4) et une paroi latérale extérieure de la plaque de recouvrement (3) soient entièrement recouvertes par la coque (1) ; dans lequel la paroi latérale extérieure de la plaque de recouvrement (3) s'adapte à une paroi intérieure de la coque (1) ; la surface d'extrémité supérieure du noyau du condensateur (4) fait face à la surface d'extrémité supérieure de la plaque de recouvrement (3) et la surface d'extrémité inférieure du noyau du condensateur (4) fait face à une surface inférieure de la coque (1) ; et
c) former le corps d'étanchéité (2) par moulage par injection sur la surface d'extrémité supérieure de la plaque de recouvrement (3) pour sceller une ouverture de la coque (1) de telle sorte que le corps d'étanchéité (2) et la coque (1) soient intégralement emballés ; dans lequel la broche de guidage (9) et le bossage de positionnement (8) traversent le corps d'étanchéité (2) pour faire saillie du corps d'étanchéité (2).

2. Procédé selon la revendication 1, dans lequel un espace est réservé entre la surface d'extrémité supérieure de la plaque de recouvrement (3) et un bord de l'ouverture de la coque (1) pour la formation du corps d'étanchéité (2) par moulage par injection.

3. Procédé selon la revendication 1, dans lequel le corps d'étanchéité (2) est intégré à la coque (1) après moulage par injection et solidification.

4. Procédé selon la revendication 1, dans lequel deux troisièmes trous traversants (7) sont prévus dans la plaque de recouvrement (3) ; les deux troisièmes trous traversants (7) correspondent respectivement à la broche de guidage (9) ; et le bossage de positionnement (8) est prévu sur la surface d'extrémité supérieure de la plaque de recouvrement (3).

5. Procédé selon la revendication 1, dans lequel un premier trou traversant (5) est formé sur le corps d'étanchéité (2) dans lequel le corps d'étanchéité (2) se connecte au bossage de positionnement (8) ; et un second trou traversant (6) est formé sur le corps d'étanchéité (2) dans lequel le corps d'étanchéité (2) se connecte à la broche de guidage (9).
